(19) Europäisches Patentamt
European Patent Office
Office européen des brevets

(11) **EP 3 273 335 A1**

(12) **EUROPEAN PATENT APPLICATION**
published in accordance with Art. 153(4) EPC

(43) Date of publication:
**24.01.2018 Bulletin 2018/04**

(51) Int Cl.:
**G06F 3/0488** (2013.01)　　　**G06T 3/60** (2006.01)

(21) Application number: **15843052.0**

(22) Date of filing: **06.07.2015**

(86) International application number:
**PCT/CN2015/083368**

(87) International publication number:
**WO 2016/145755 (22.09.2016 Gazette 2016/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **17.03.2015　CN 201510117962**

(71) Applicant: **JRD Communication Inc.**
**Shenzhen, Guangdong 518057 (CN)**

(72) Inventors:
• **TIAN, Hongqi**
　**Shenzhen**
　**Guangdong 518057 (CN)**
• **FENG, Jihong**
　**Shenzhen**
　**Guangdong 518057 (CN)**
• **MENG, Lulu**
　**Shenzhen**
　**Guangdong 518057 (CN)**

(74) Representative: **ZHAOffice SPRL**
**Rue de Bedauwe 13**
**5030 Gembloux (BE)**

(54) **IMAGE ROTATION METHOD FOR INTELLIGENT TERMINAL, AND INTELLIGENT TERMINAL**

(57)　A method and a smart terminal for rotating a picture are disclosed. The method includes steps of: detecting, by the smart terminal, that a touch operation applied on the picture displayed on a screen of the smart terminal includes at least two touch points, and, when a trajectory of each of the at least two touch points is an arc, determining the touch operation to be an operation of rotating the picture, and rotating synchronously the picture in accordance with the rotation direction of the trajectories and the rotation angle. By the aforementioned means, in the present disclosure the picture can be quickly rotated to the desired angle of the user, thereby enhancing the user experience.

Detect, by a smart terminal, that a touch operation applied on a picture displayed on a screen of the smart terminal comprises at least two touch points, and, when a trajectory of each of the at least two touch points is an arc, determine the touch operation to be an operation of rotating the picture — 101

Determine a rotation angle of the touch operation, based on the trajectories of the at least two touch points — 102

Rotate, synchronously, the picture in accordance with a rotation direction of the trajectories and the rotation angle — 103

FIG. 1

**Description**

**FIELD OF THE DISCLOSURE**

The present disclosure relates to the field of smart terminal technologies, and more particularly, to a method of rotating a picture with a smart terminal and a smart terminal.

**RELATED ART**

With the rapid development of multimedia technologies, a mobile terminal has evolved gradually from a basic voice communication terminal to a feature-rich smart terminal capable of multimedia presentations. For example, features like audio, video, photography, and so on, have already become the essential features of a smart terminal.

However, with the constant enrichment of features of a smart terminal, users are having higher and higher demands for experiences with the smart terminal, and convenience and speediness have been prerequisites for every function on a smart terminal. Operations of many existing basic features still cannot meet users' requirements. For example, with picture display, a basic feature of a smart terminal, when a user needs to rotate a picture displayed on the smart terminal, only by unlocking the smart terminal and clicking on the menu to enter a picture editable state and selecting a rotation direction can the picture be further rotated. In addition, each time the picture may only be rotated for a limited angle. Hence, multiple rotations may be generally required to reach the targeted angle, the operations of which are complicated and time is also wasted, resulting in a reduction of user experience.

**SUMMARY OF THE DISCLOSURE**

A primary technical problem to be addressed by the present disclosure is to provide a method of rotating a picture with a smart terminal and a smart terminal, capable of quickly rotating the picture to the desired angle of the user and thus enhancing the user experience.

To address the aforementioned technical problem, a technical solution adopted by the present disclosure follows as below: to provide a method of rotating a picture with a smart terminal, the method comprising:

detecting, by the smart terminal, that a touch operation applied on a picture displayed on a screen of the smart terminal comprises at least two touch points, and, when a trajectory of each of the at least two touch points is an arc, determining the touch operation to be an operation of rotating the picture; determining a rotation angle of the touch operation, based on the trajectories of the at least two touch points; and rotating, synchronously, the picture in accordance with a rotation direction of the trajectories and the rotation angle.

The method may further comprise, before the step of rotating synchronously the picture in accordance with the rotation direction of the trajectories and the rotation angle:

determining whether the rotation angle exceeds a threshold angle value;
when the rotation angle exceeds the threshold angle value, synchronously rotating the picture in accordance with the rotation direction of the trajectories and the rotation angle.

The method may further comprise, after the step of when the rotation angle exceeds the threshold angle value, synchronously rotating the picture in accordance with the rotation direction of the rotation action and the rotation angle:

determining, among a plurality of preset angles, a first preset angle which has a minimum absolute value of difference with the rotation angle after the synchronous rotation, and rotating the picture to a position the first preset angle.

The plurality of preset angles may comprise angles of 0 degrees, 90 degrees, 180 degrees and 270 degrees, under a standard coordinate system.

The step of determining, among the plurality of preset angles, the first preset angle which has the minimum absolute value of difference with the rotation angle after the synchronous rotation, and rotating the picture to the position of the first preset angle in accordance with the rotation direction of the trajectories may specifically comprise:

if an absolute value of the rotation angle is smaller than 45 degrees or greater than 325 degrees, bouncing the picture back to its initial position;
if the absolute value of the rotation angle is greater than 45 degrees and smaller than 135 degrees, holding the picture at a position of 90 degrees;
if the absolute value of the rotation angle is greater than 135 degrees and smaller than 225 degrees, holding the picture at a position of 180 degrees;
if the absolute value of the rotation angle is greater than 225 degrees and smaller than 325 degrees, holding the picture at a position of 270 degrees.

The threshold angle value may be of 5 degrees.
The step of determining the rotation angle of the touch operation, based on the trajectories of the at least two touch points may comprise specifically:

determining, by the smart terminal, by the law of cosines, the rotation angle of the touch operation according to the trajectories of the at least two touch points.

To address the aforementioned technical problem, another technical solution adopted by the present disclosure follows as below: to provide a smart terminal, comprising a detection module, a determination module and an execution module,
wherein the detection module is configured to detect that a touch operation applied on a picture displayed on a screen of the smart terminal comprises at least two touch points, and to, when a trajectory of each of the at least two touch points is an arc, determine the touch operation to be an operation of rotating the picture;
the determination module is configured to determine a rotation angle of the touch operation, based on the trajectories of the at least two touch points;
the execution module is configured to rotate, synchronously, the picture in accordance with a rotation direction of the trajectories and the rotation angle.

The determination module may further be configured to determine whether the rotation angle exceeds a threshold angle value, before the picture is rotated synchronously in accordance with the rotation direction of the trajectories and the rotation angle;
the execution module may further be configured to, when the rotation angle exceeds the threshold angle value, synchronously rotate the picture in accordance with the rotation direction of the trajectories and the rotation angle.

The execution module may specifically be configured to determine, among a plurality of preset angles, a first preset angle which has a minimum absolute value of difference with the rotation angle after the synchronous rotation, and to rotate the picture to a position of the first preset angle in accordance with the rotation direction of the trajectories.

Beneficial effects of the present disclosure follow as below: distinguished from the prior art, a smart terminal in accordance with the disclosure may detect that a touch operation applied on a picture displayed on a screen of the smart terminal comprises at least two touch points, and, when a trajectory of each of the at least two touch points is an arc, determine the touch operation to be an operation of rotating the picture. Hence in the present disclosure, as long as a two-finger touch operation applied on a picture is detected, a rotation command may be triggered to rotate the picture, without the need of entering the menu, thus enabling much simpler operations. Then a rotation angle of the touch operation may be determined based on the trajectories of the at least two touch points and the picture may be rotated synchronously in accordance with a rotation direction of the trajectories and the rotation angle, where the user needs not to select rotation multiple times and may easily rotate the picture to the desired angle. By the above means, not only the operations are simple which enhance the user experience, operating resources of the smart terminal may also be saved.

## BRIEF DESCRIPTION OF THE DRAWINGS

FIG. 1 shows a flow chart illustrating an embodiment of a method of rotating a picture according to the present disclosure.
FIG. 2 illustrates a definition of polar coordinates according to the present disclosure.
FIG. 3 illustrates an embodiment of computing a rotation angle based on polar coordinates according to the present disclosure.
FIG. 4 shows a flow chart illustrating another embodiment of a method of rotating a picture according to the present disclosure.
FIG. 5 illustrates a case in the method of rotating a picture of FIG. 4, when an angle of the picture is 0 degrees.
FIG. 6A illustrates a case in the method of rotating a picture of FIG. 4, when the picture is rotated 30 degrees.
FIG. 6B illustrates a status in the method of rotating a picture of FIG. 4, after the picture is rotated 30 degrees.
FIG. 7A illustrates a case in the method of rotating a picture of FIG. 4, when the picture is rotated 70 degrees.
FIG. 7B illustrates a status in the method of rotating a picture of FIG. 4, after the picture is rotated 70 degrees.
FIG. 8A illustrates a case in the method of rotating a picture of FIG. 4, when the picture is rotated 120 degrees.
FIG. 8B illustrates a status in the method of rotating a picture of FIG. 4, after the picture is rotated 120 degrees.
FIG. 9A illustrates a case in the method of rotating a picture of FIG. 4, when the picture is rotated 150 degrees.
FIG. 9B illustrates a status in the method of rotating a picture of FIG. 4, after the picture is rotated 150 degrees.
FIG. 10A illustrates a case in the method of rotating a picture of FIG. 4, when the picture is rotated 200 degrees.
FIG. 10B illustrates a status in the method of rotating a picture of FIG. 4, after the picture is rotated 200 degrees.
FIG. 11A illustrates a case in the method of rotating a picture of FIG. 4, when the picture is rotated 250 degrees.
FIG. 11B illustrates a status in the method of rotating a picture of FIG. 4, after the picture is rotated 250 degrees.
FIG. 12A illustrates a case in the method of rotating a picture of FIG. 4, where an angle of 90 degrees is taken as a basis angle.
FIG. 12B illustrates a case in the method of rotating a picture of FIG. 4, when the picture is rotated 100 degrees, with an angle of 90 degrees as the basis angle.
FIG. 12C illustrates a status in the method of rotating a picture of FIG. 4, after the picture is rotated 100 degrees, with an angle of 90 degrees as the basic angle.
FIG. 13 shows a block diagram illustrating an embodiment of a smart terminal according to the present disclosure.

## DETAILED DESCRIPTION OF THE DISCLOSURE

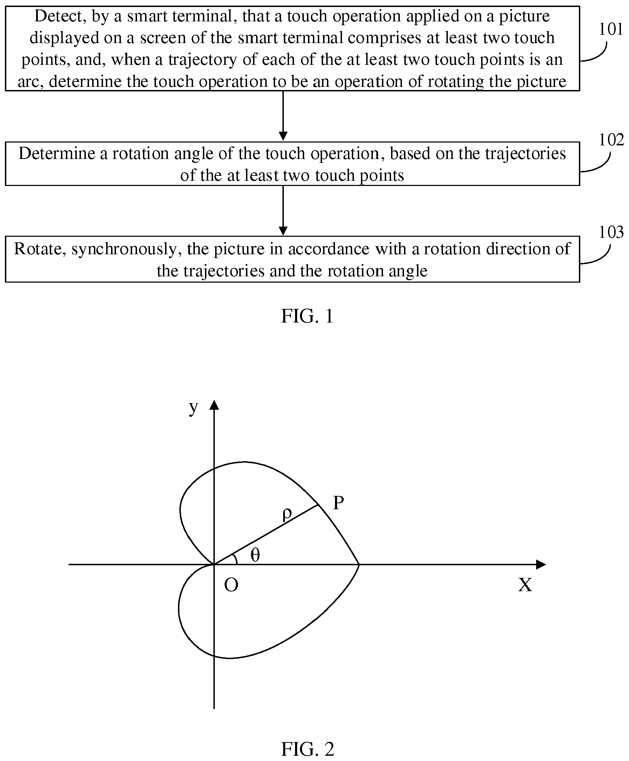

Referring to FIG. 1, a flow chart illustrating an embodiment of a method of rotating a picture according to the present disclosure is shown. The method of rotating a picture according to this embodiment comprises the following steps:

101: detecting, by the smart terminal, that a touch operation applied on the picture displayed on a screen of the smart terminal comprises at least two touch points, and, when a trajectory of each of the at least two touch points is an arc, determining the touch operation to be an operation of rotating the picture.
To rotate the picture displayed on the screen of the smart terminal, the smart terminal may first detect a trigger event for rotating the picture. Specifically, the smart terminal may, when detecting a touch operation received by the picture displayed on its screen, first determine whether the touch operation comprises at least two touch points. The at least two touch points may be produced by the successive index finger and middle finger, and may also be produced by any two fingers or a combination of multiple fingers, which won't be limited herein.
The smart terminal may, when detecting that the touch operation received on its screen comprises at least two touch points, further determine whether a trajectory produced by the touch operation caused by each of the aforementioned at least two touch points is an arc, namely, determine whether the touch operation is intended for rotating the picture. If the smart terminal determines that the trajectory is an arc, then the current touch operation will be determined to be an operation of rotating the picture displayed on the screen of the smart terminal.
102: determining a rotation angle of the touch operation, based on the trajectories of the at least two touch points.

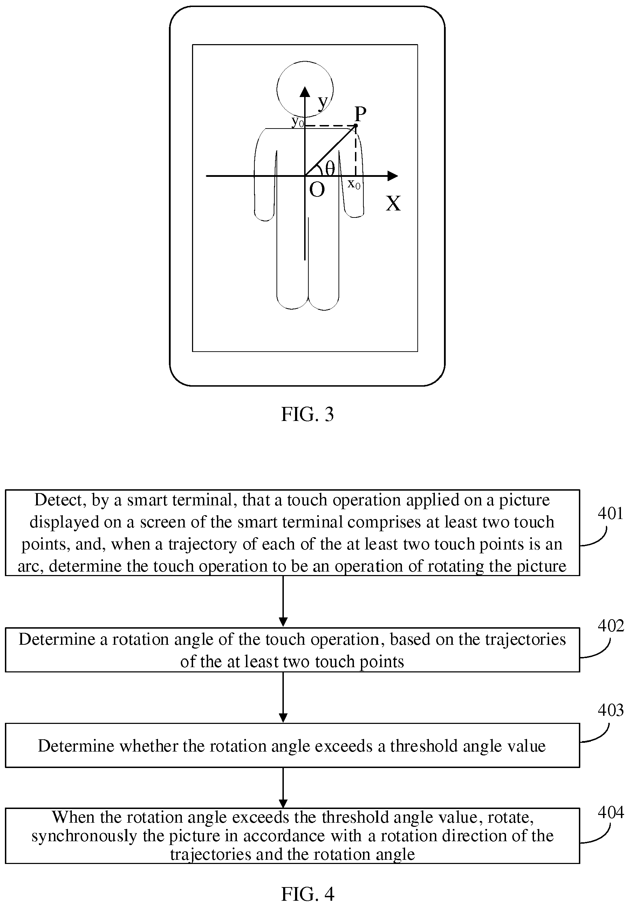

The smart terminal may, after determining the current touch operation to be the operation of rotating the picture, determine a rotation angle of the touch operation based on a trajectory of each of at least two of the touch points. More specifically, the smart terminal may determine, based on the law of cosines, the rotation angle of the touch operation.
Hereinbelow, a polar coordinate system is first introduced, as is shown in FIG. 2, which illustrates the definition of a polar coordinate system. In a plane a fixed point O is taken as a pole, a ray Ox is drawn from point O as a polar axis, and a unit length and a positive direction are determined, where in this embodiment the counterclockwise direction is selected as a positive direction. In the plane an arbitrary point P is selected, let $\rho$ represent a length of segment OP (i.e., a polar radius of point P), let $\theta$ represent an angle measured from Ox to OP, which is a polar angle of point P, then an ordered pair $(\rho, \theta)$ represents the polar coordinates of point P, and such a coordinate system established in accordance with the aforementioned is a polar coordinate system.
Further referring to FIG. 3, a diagram illustrating an embodiment of computing a rotation angle based on polar coordinates is shown. Hereinbelow, this embodiment will be described by taking the case of the touch operation being produced by a first touch point and a second touch point for example.
In conjunction with FIG. 2 and FIG. 3, a polar coordinate system is established on a screen of the smart terminal, wherein the first touch point is the coordinate point P $(x_0, y_0)$, and the second touch point is the pole O$(x_1, y_1)$, with OP being the polar radius, wherein $x_0$, $y_0$, $x_1$, $y_1$ are the respective coordinate values of the first and second touch points in a rectangular plane coordinate system established on the screen of the smart terminal. By coordinate transformation between the polar coordinate system and the rectangular plane coordinate system, and by the law of cosines, for any point (x, y) on the coordinate plane:

$$x = \rho * \cos(\theta) \qquad (1)$$

$$y = \rho * \sin(\theta) \qquad (2)$$

the following can be obtained from equation (1) and equation (2),

$$\rho = \text{sqrt} (x2 + y2),$$

$$\theta = \arctan y/x,$$

In the current embodiment, accordingly, for coordinates (x, y) of OP, x= $x_0$- $x_1$, y= $y_0$- $y_1$, and since $\theta$= arctan y/x, giving $\theta$= arctan $(y_0- y_1)/(x_0- x_1)$.
With the rotation of the two touch points, $\theta$ may vary with the rotation of OP. The initial angle of the picture is recorded as $\theta_0$, the corresponding angle after the ro-

tation is $\theta_n$, thus the rotation angle $\theta = \theta_n - \theta_0$.

In other embodiments, if there are more than two touch points (for example, three, four, or five touch points), similarly, a rotation angle of a line connecting the multiple touch points may be detected to complete the rotation of the picture, which will not be limited herein.

103: rotating, synchronously, the picture in accordance with a rotation direction of the trajectories and the rotation angle.

The smart terminal may, after obtaining the rotation direction of the trajectories of the touch points and the rotation angle, utilize a Canvas to rotate, by the rotation angle, the picture displayed on the screen that is to be rotated, based on the aforementioned rotation direction. The aforementioned rotation action of the smart terminal may be a continuous action. Once a rotation angle is detected, the picture may be rotated correspondingly in accordance with the rotation action, on basis of the angle after the previous rotation, until the smart terminal detects an end of the rotation operation and that at least two touch points depart from the screen of the smart terminal.

Distinguished from the prior art, a smart terminal in accordance with the current embodiment may detect that a touch operation applied on a picture displayed on a screen of the smart terminal comprises at least two touch points, and, when a trajectory of each of the at least two touch points is an arc, determine the touch operation to be an operation of rotating the picture. Hence in the present disclosure, as long as an at least two-finger touch operation applied on the picture is detected, a rotation command will be triggered to rotate the picture, without the need of entering the menu, thus enabling much simpler operations. Then a rotation angle of the touch operation may be determined based on the trajectories of the at least two touch points and the picture will be rotated synchronously in accordance with a rotation direction of the trajectories and the rotation angle, where the user needs not to select rotation for multiple times and can easily rotate the picture to the desired angle. By the above means, not only the operations are simple which enhances the user experience, operating resources of the smart terminal may also be saved.

Referring to FIG. 4, a flow chart illustrating another embodiment of a method of rotating a picture according to the present disclosure is shown. The method of rotating a picture according to this embodiment comprises the following steps:

401: detecting, by the smart terminal, that a touch operation applied on a picture displayed on a screen of the smart terminal comprises at least two touch points, and, when a trajectory of each of the at least two touch points is an arc, determining the touch operation to be an operation of rotating the picture.
402: determining a rotation angle of the touch operation, based on the trajectories of the at least two touch points.

Steps 401-402 are the same as the steps 101-102 illustrated in the previous embodiment, and thus will not be detailed herein.

403: determining whether the rotation angle exceeds a threshold angle value.

When a user touches the screen of the smart terminal, not every touch is intended for rotating the picture, since it may be an inadvertent touch. Hence, to prevent a further operation caused by the inadvertent touch from happening in order to save the memory and operating resources of the smart terminal, the smart terminal of the current embodiment may, after detecting the touch operation of rotating the picture displayed on the screen of the smart terminal, make further judgment on the rotation angle. More specifically, the smart terminal may compare the detected rotation angle against a preset threshold angle value to determine whether the rotation angle exceeds the preset threshold angle value. For example, the preset threshold angle value may be 5 degrees, when the rotation angle is greater than 5 degrees, then the current touch operation will be determined to be an operation of rotating the picture, while if the rotation angle is smaller than 5 degrees, then the current touch operation will be determined not to be an operation of rotating the picture. It should be noted that in other embodiments, the threshold angle value may also be set as other values such as 4 degrees, 8 degrees, 10 degrees, and so on, which will not be limited herein, as long as it is reasonable.

404: when the rotation angle exceeds the threshold angle value, synchronously rotating the picture in accordance with a rotation direction of the trajectories and the rotation angle.

The angle of the picture after the completion of synchronous rotation is not unlimited. To enable the position maintained by the picture after each rotation to be more regular, in the current embodiment multiple preset angles are set in a standard coordinate system, the preset angles comprising angles of 0 degrees, 90 degrees, 180 degrees and 270 degrees.

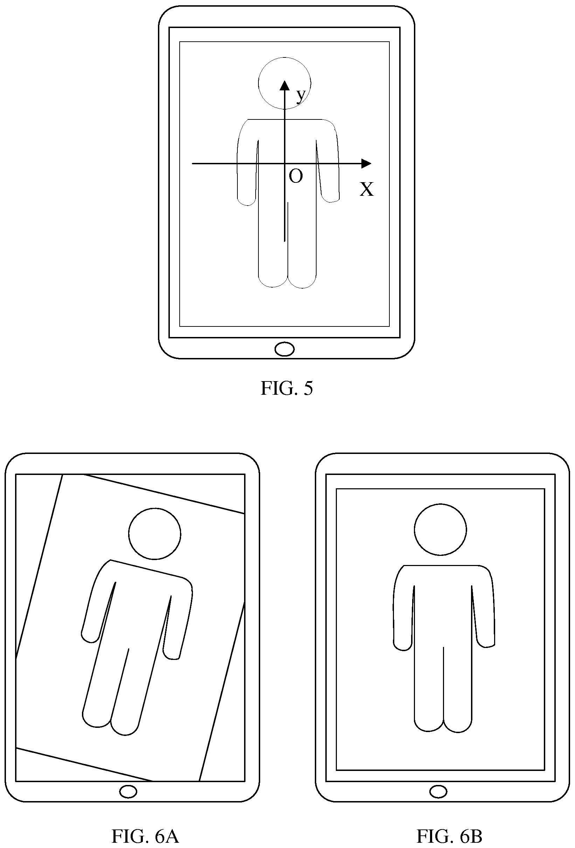

In a preferred embodiment, the centre point of the screen of the smart terminal may be taken as a coordinate origin to establish a standard rectangular plane coordinate system, hereinbelow a counterclockwise direction is taken as the positive direction for description. A positive direction of the horizontal axis is the 0-degree position, a positive direction of the vertical axis is the 90-degree position, a non-positive direction of the horizontal axis the 180-degree position, and a non-positive direction of the vertical axis the 270-degree position. It should be noted that, the aforementioned counterclockwise direction rotation is for way of example only, and the rotation by clockwise direction may also be adopted, where relative setting positions of the preset angles may need to be exchanged. In addition, a landscape or portrait orientation of the screen of the smart terminal is also not limited, when the orientation of the screen of the smart terminal is changed and the picture rotates simultaneously with the screen, the standard coordinate system and the preset positions may also be switched along with the switch of the orientation of the screen, which thus will not be limited herein. Further referring to FIG. 5, a case where the picture seats at a 0 degrees angle is shown.

When determining that the rotation angle exceeds the threshold angle value and synchronously rotating the picture in accordance with the rotation direction of the rotation operation and the rotation angle, the smart terminal may further determine, among multiple preset angles, a first preset angle which has a minimum absolute value of difference with the rotation angle after the synchronous rotation, and rotate the picture to a position at the first preset angle.

The preset angles in this embodiment may comprise the aforementioned angles of 0 degrees, 90 degrees, 180 degrees and 360 degrees.

If an absolute value of the rotation angle is greater than 0 degrees and smaller than 45 degrees, the picture will be bounced to its initial position.

More specifically, taking the case of the current picture seating at the 0 degrees position and the clockwise direction as the positive direction for example, when the rotation angle is 30 degrees, since the angle after the rotation based on 0 degrees is 30 degrees, which has the minimum absolute value of difference with the preset angle of 0 degrees, hence the picture will be bounced to its original position, as is shown in FIGS. 6A and 6B.

If the absolute value of the rotation angle is greater than 45 degrees and smaller than 135 degrees, the picture will be maintained at the 90-degree position.

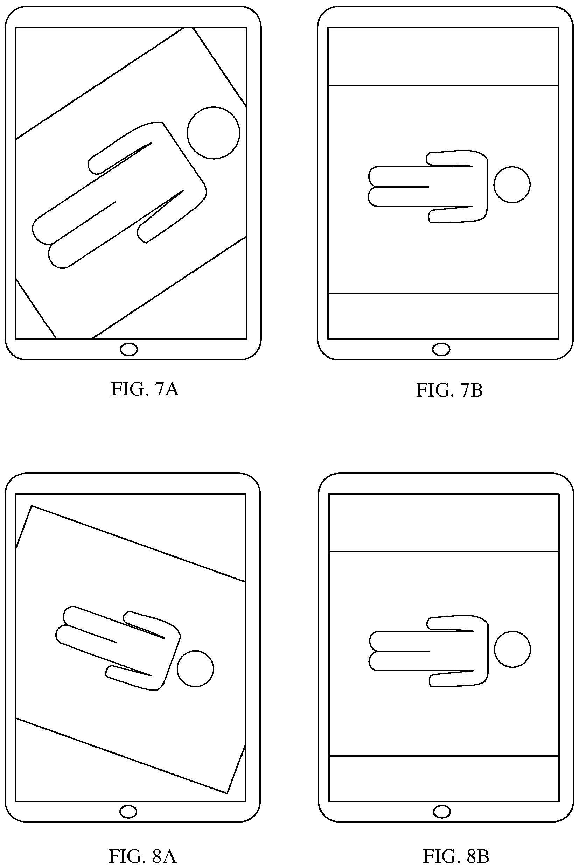

For example, when the rotation angle is 70 degrees, since the rotation angle after the rotation based on 0 degrees is 70 degrees, which has the minimum absolute value of difference with the preset angle of 90 degrees, hence the picture will be rotated 90 degrees and maintained at the 90-degree position, as is shown in FIGS. 7A and 7B.

When the rotation angle is 120 degrees, since the rotation angle of the picture after the synchronous rotation based on 0 degrees is 120 degrees, which has the minimum absolute value of difference with the preset angle of 90 degrees, hence the picture will be rotated 90 degrees and maintained at the 90-degree position, as is shown in FIGS. 8A and 8B.

If the absolute value of the rotation angle is greater than 135 degrees and smaller than 225 degrees, the picture will be maintained at the 180-degree position.

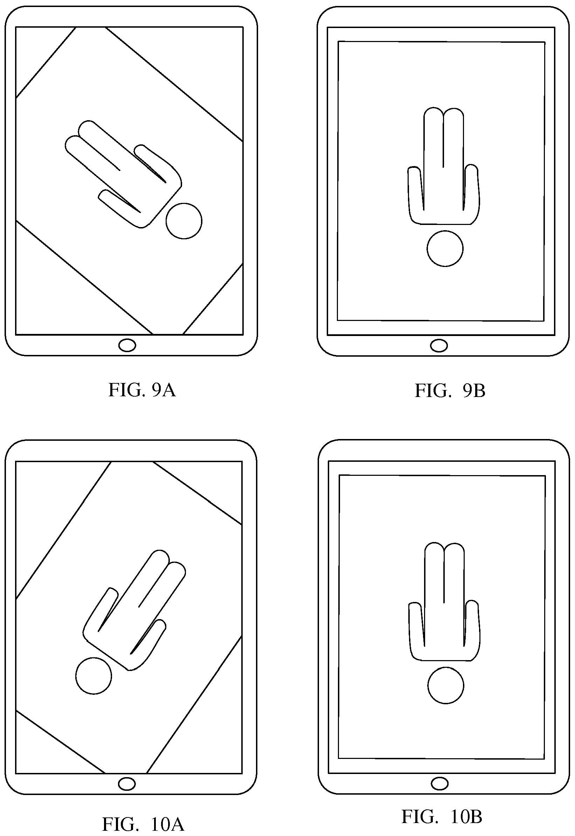

For example, when the rotation angle is 150 degrees, since the rotation angle of the picture after the synchronous rotation based on 0 degrees is 150 degrees, which has the minimum absolute value of difference with the preset angle of 180 degrees, hence the picture will be rotated 180 degrees and maintained at the 180-degree position, as is shown in FIGS. 9A and 9B.

When the rotation angle is 200 degrees, since the rotation angle of the picture after the synchronous rotation based on 0 degrees is 200 degrees, which has the minimum absolute value of difference with the preset angle of 180 degrees, hence the picture will be rotated 180 degrees and maintained at the 180-degree position, i.e., the 180-degree position in the current embodiment, as is shown in FIGS. 10A and 10B.

If the absolute value of the rotation angle is greater than 225 degrees, the picture will be maintained at the 270-degree position.

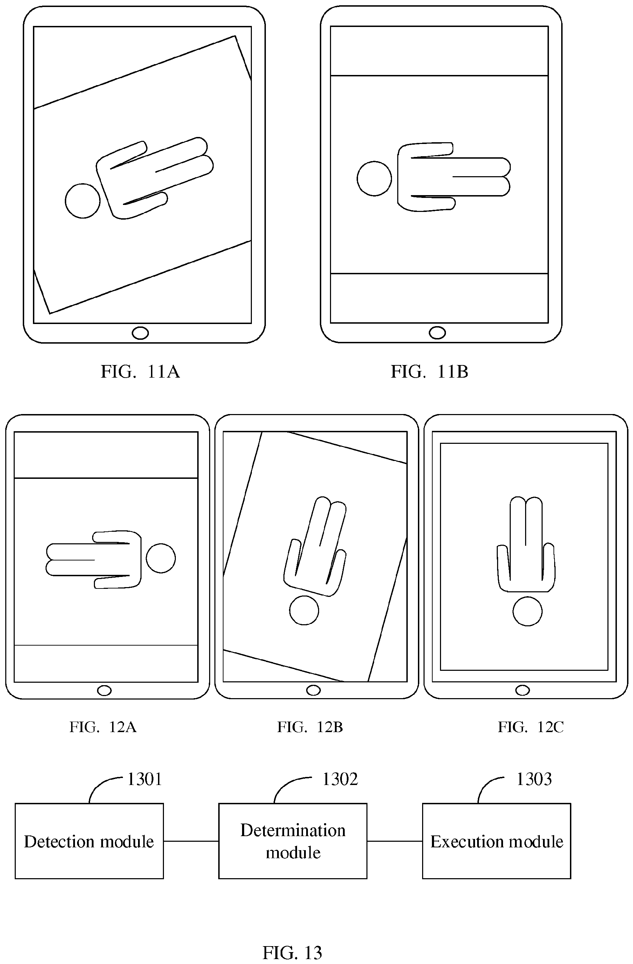

For example, when the rotation angle is 250 degrees, since the rotation angle of the picture after the rotation based on 0 degrees is 250 degrees, which has the minimum absolute value of difference with the preset angle of 270 degrees, hence the picture will be rotated 270 degrees on basis of the initial 0 degrees angle and maintained at the 270-degree position, as is shown in FIGS. 11A and 11B.

It should be noted that, when the initial angle of the picture is not 0 degrees angle, but the 90-degree angle, 180-degree angle or 270-degree angle after rotation, then similarly the angle of the picture after the synchronous rotation may be compared against each of the preset angles to determine the first preset angle having the minimum absolute value of difference with the rotation angle, and the picture may be rotated to the position of the first preset angle in accordance with the rotation direction of the trajectories.

For example, when the initial angle of the picture is 90 degrees and the clockwise direction is the positive direction and the picture is rotated 100 degrees, then the rotation angle of the picture after the synchronous rotation may be 190 degrees, on basis of the 90 degrees. Since the absolute value of difference between 190 degrees and the preset angle of 180 degrees is the minimum, the picture will be rotated 90 degrees and hold at the position of 180 degrees, as is shown in FIGS. 12A, 12B and 12C.

It should be noted that, in the current embodiment the number and size of the preset angles are not limited. In other embodiments, the preset angles may be of other numbers and values, as long as they can enable a regular rotation of the picture, and thus won't be limited herein.

Distinguished from the prior art, a smart terminal in accordance with the current embodiment may detect that a touch operation applied on a picture displayed on a screen of the smart terminal comprises at least two touch points, and, when a trajectory of each of the at least two touch points is an arc, determine the touch operation to be an operation of rotating the picture. Hence in the present disclosure, once an at least two-finger touch operation applied on the picture is detected, a rotation command may be triggered to rotate the picture, without the need of entering the menu, thus enabling much simpler operations. Then a rotation angle of the touch operation will be determined based on the trajectories of the at least two touch points and the picture will be synchronously rotated in accordance with a rotation direction of the trajectories and the rotation angle, where the user needs not to select rotation for multiple times and can easily rotate the picture to the desired angle. By the above means, not only the operations are simple which enhance the user experience, operating resources of the smart terminal may also be saved.

Distinguished from the preceded embodiment, in the current embodiment it will be further determined whether the rotation angle exceeds the threshold angle value when the rotation angle is determined, thereby effectively reducing the occurrence of the memory resources of the smart terminal being wasted which is caused by inadvertent touch. In addition, a plurality of preset angles is set in the current embodiment, which further enhances the user experience.

Referring to FIG. 13, a block diagram illustrating an embodiment of a smart terminal according to the present disclosure is shown. The smart terminal of the current embodiment comprises a detection module 1301, a determination module 1302 and an execution module 1303.

The detection module 1301 is configured to detect that a touch operation applied on a picture displayed on a screen of the smart terminal comprises at least two touch points, and to, when a trajectory of each of the at least two touch points is an arc, determine the touch operation to be an operation of rotating the picture.

To rotate the picture displayed on the screen of the smart terminal, the detection module 1301 may first detect a trigger event for rotating the picture.

Specifically, the detection module may, when detecting a touch operation received by the picture displayed on the screen of the smart terminal, first determine whether the touch operation comprises at least two touch points. The at least two touch points may be produced by the successive index finger and middle finger, and may also be produced by any two fingers or a combination of multiple fingers, which won't be limited herein.

The detection module 1301 may, when detecting that the touch operation received on the screen of the mobile terminal comprises at least two touch points, further determine whether a trajectory produced by the touch operation caused by each of the aforementioned at least two touch points is an arc, namely, determine whether the touch operation is intended for rotating the picture. If the detection module 1301 determines the trajectory to be an arc, then the current touch operation will be determined to be an operation of rotating the picture displayed on the screen of the smart terminal.

The determination module 1302 is configured to determine a rotation angle of the touch operation, based on the trajectories of the at least two touch points.

After the detection module 1301 determines the current touch operation to be the operation of rotating the picture, a rotation angle of the touch operation may further be determined based on a trajectory of each of at least two of the touch points. More specifically, the smart terminal may determine, based on the law of cosines, the rotation angle of the touch operation.

A polar coordinate system is established on the screen of the smart terminal, wherein the first touch point is the coordinate point $P(x_0, y_0)$, and the second touch point is the pole $O(x_1, y_1)$, with OP being the pole radius, wherein $x_0, y_0, x_1, y_1$ are the respective coordinate values of the first and second touch points in a rectangular plane coordinate system established on the screen of the smart terminal. By coordinate transformation between the polar coordinate system and the rectangular plane coordinate system, and by the law of cosines, for any point $(x, y)$ on the coordinate plane:

$$x = \rho * \cos(\theta) \qquad (1)$$

$$y = \rho * \sin(\theta) \qquad (2)$$

the following can be obtained from equation (1) and equation (2),

$$\rho = \mathrm{sqrt}\ (x2 + y2),$$

$$\theta = \arctan\ y/x,$$

In the current embodiment, accordingly, for coordinates $(x, y)$ of OP, $x = x_0 - x_1$, $y = y_0 - y_1$, and since $\theta = \arctan y/x$, giving $\theta = \arctan (y_0 - y_1)/(x_0 - x_1)$.

With the rotation of the two touch points, $\theta$ may vary with the rotation of OP, and the initial angle of the picture may be recorded by the determination module 1302 as $\theta_0$, the corresponding angle after the rotation is $\theta_n$, thus the rotation angle $\theta = \theta_n - \theta_0$.

In other embodiments, if there are more than two touch points (for example, three, four, or five touch points), similarly, the determination module 1302 may detect a rotation angle of a line connecting the multiple touch points to complete the rotation of the picture, which will not be limited herein.

The execution module 1303 is configured to rotate, synchronously, the picture in accordance with a rotation direction of the trajectories and the rotation angle.

The execution module 1303 may, after the determination module 1302 obtains the rotation direction of the trajectories of the touch points and the rotation angle, utilize a Canvas to rotate, by the rotation angle, the picture displayed on the screen that is to be rotated, based on the aforementioned rotation direction. The aforementioned rotation action performed by the execution module 1303 may be a continuous action. Once a rotation angle is detected, the picture may be rotated correspondingly in accordance with the rotation action, on basis of the angle after the previous rotation, until the detection module 1301 detects an end of the rotation operation and that at least two touch points depart from the screen of the smart terminal.

Distinguished from the prior art, the detection module in accordance with the current embodiment may detect that a touch operation applied on a picture displayed on a screen of the smart terminal comprises at least two touch points, and, when a trajectory of each of the at least two touch points is an arc, determine the touch operation to be an operation of rotating the picture. Hence in the present disclosure, once an at least two-finger touch operation applied on the picture is detected, a rotation command will be triggered to rotate the picture, without the need of entering the menu, thus enabling much simpler operations. Then a rotation angle of the touch operation may be determined by the determination module, based on the trajectories of the at least two touch points, and the execution module may rotate synchronously the picture in accordance with a rotation direction of the trajectories and the rotation angle, where the user needs not to select rotation for multiple times and can easily rotate the picture to the desired angle. By the above means, not only the operations are simple which enhance the user experience, operating resources of the smart terminal may also be saved.

Further referring to FIG. 13, in another embodiment, when a user touches the screen of the smart terminal, not every touch is intended for rotating the picture, since it may be an inadvertent touch. Hence, to prevent a further operation caused by the inadvertent touch from happening in order to save the memory and operating resources of the smart terminal, the determination module 1302 of the current embodiment may, after the detection module 1301 detecting the touch operation of rotating the picture displayed on the screen of the smart terminal and before the picture being synchronously rotated in accordance with the rotation direction of the trajectories and the rotation angle, make a further judgment on the rotation angle.

For example, the preset threshold angle value may be 5 degrees, when the rotation angle is greater than 5 degrees, then the current touch operation will be determined by the determination module 1302 to be an operation of rotating the picture, while if the rotation angle is smaller than 5 degrees, then the current touch operation will be determined not to be an operation of rotating the picture. It should be noted that in other embodiments, the threshold angle value may also be other values such as 4 degrees, 8 degrees, 10 degrees, and so on, which will not be limited herein, as long as it is reasonable.

In addition, the angle of the picture after the completion of synchronous rotation thus being hold is not unlimited. To enable the position maintained by the picture after each rotation to be more regular, in the current embodiment the smart terminal may set multiple preset angles in a standard coordinate system, the preset angles comprising angles of 0 degrees, 90 degrees, 180 degrees and 270 degrees.

In a preferred embodiment, the centre point of the screen of the smart terminal may be taken as a coordinate origin to establish a rectangular plane coordinate system, hereinbelow the counterclockwise direction is taken as the positive direction for description. A positive direction of the horizontal axis is the 0 degrees position, a positive direction of the vertical axis is the 90-degree position, a non-positive direction of the horizontal axis the 180-degree position, and a non-positive direction of the vertical axis the 270-degree position. It should be noted that the aforementioned counterclockwise direction rotation is for way of example only, and the rotation by clockwise direction may also be adopted, where relative setting positions of the preset angles may need to be exchanged. In addition, a landscape or portrait orientation of the screen of the smart terminal is also not limited. When the orientation of the screen of the smart terminal is changed and the picture rotates simultaneously with the screen, the standard coordinate system and the preset positions will also be switched along with the switch of the orientation of the screen, which thus will not be limited herein.

The preset angles in this embodiment comprise the aforementioned angles of 0 degrees, 90 degrees, 180 degrees and 360 degrees.

When an absolute value of the rotation angle is smaller than 45 degrees or greater than 325 degrees, the execution module 1303 may bounce the picture back to its initial position.

More specifically, taking the case of the current picture seating at the 0 degrees position and the clockwise direction as the positive direction for example, when the rotation angle is 30 degrees, since the angle of the picture after the synchronous rotation based on 0 degrees is 30 degrees, the absolute value of difference between the rotation angle of 30 degrees of the picture after the synchronous rotation and the preset angle of 0 degrees is the minimum, hence the picture will be bounced by the execution module 1303 to its initial position.

If the absolute value of the rotation angle is greater than 45 degrees and smaller than 135 degrees, the execution module 1303 may maintain the picture at the position of 90 degrees.

For example, when the rotation angle is 70 degrees, since the rotation angle of the picture after the synchronous rotation based on 0 degrees is 70 degrees, which has the minimum absolute value of difference with the preset angle of 90 degrees, hence the execution module 1303 may rotate the picture, on basis of the initial 0 degrees, 90 degrees and hold the picture at the position of 90 degrees.

When the rotation angle is 120 degrees, since the rotation angle of the picture after the synchronous rotation based on 0 degrees is 120 degrees, which has the minimum absolute value of difference with the preset angle of 90 degrees, hence the execution module 1303 may rotate the picture 90 degrees, and maintain the picture at the position of 90 degrees.

If the absolute value of the rotation angle is greater than 135 degrees and smaller than 225 degrees, the execution module 1303 may maintain the picture at the position of 180 degrees.

For example, when the rotation angle is 150 degrees, since the rotation angle of the picture after the synchronous rotation based on 0 degrees is 150 degrees, which has the minimum absolute value of difference with the preset angle of 180 degrees, hence the execution module 1303 may rotate the picture 180 degrees and maintain the picture at the position of 180 degrees.

When the rotation angle is 200 degrees, since the rotation angle of the picture after the synchronous rotation based on 0 degrees is 200 degrees, which has the minimum absolute value of difference with the preset angle of 180 degrees, hence the execution module 1303 may rotate the picture, on basis of the initial 0 degrees, 180 degrees and maintain the picture at the position of 180 degrees, namely the 180-degree position in the current embodiment.

If the absolute value of the rotation angle is greater than 225 degrees and smaller than 325 degrees, the execution module 1303 may maintain the picture at the position of rotation 270 degrees.

For example, when the rotation angle is 250 degrees, since the rotation angle of the picture after the rotation based on 0 degrees is 250 degrees, which has the minimum absolute value of difference with the preset angle of 270 degrees, hence the execution module 1303 may rotate the picture, on basis of the initial 0 degrees, 270 degrees and maintain the picture at the 270-degree position.

It should be noted that, when the initial angle of the picture is not 0 degrees, but the 90-degree, 180-degree or 270-degree angle after rotation, then similarly the determination module 1302 may compare the angle of the picture after the synchronous rotation against each of the preset angles to determine the first preset angle having the minimum absolute value of difference with the rotation angle, and the execution module 1303 may rotate the picture to the position of the first preset angle in accordance with the rotation direction of the trajectories.

For example, when the initial angle of the picture is 90 degrees and the clockwise direction is the positive direction and the picture is rotated 100 degrees, then the rotation angle of the picture after the synchronous rotation would be 190 degrees, on basis of the 90 degrees. Since the absolute value of the difference between 190 degrees and the preset angle of 180 degrees is the minimum, the execution module 1303 may rotate the picture 90 degrees and maintain the picture at the position of 180 degrees.

It should be noted that, in the current embodiment the number and size of the preset angles are not limited. In other embodiments, the preset angles may be of other numbers and values, as long as they can enable a regular rotation of the picture, and thus won't be limited herein.

Distinguished from the prior art, the detection module based on the current embodiment may detect that a touch operation applied on a picture displayed on a screen of the smart terminal comprises at least two touch points, and, when a trajectory of each of the at least two touch points is an arc, determine the touch operation to be an operation of rotating the picture. Hence in the present disclosure, as long as an at least two-finger touch operation applied on the picture is detected, a rotation command will be triggered to rotate the picture, without the need of entering the menu, thus enabling much simpler operations. Then a rotation angle of the touch operation may be determined by the determination module, based on the trajectories of the at least two touch points, and the execution module may rotate synchronously the picture in accordance with a rotation direction of the trajectories and the rotation angle, where the user needs not to select rotation for multiple times and can easily rotate the picture to the desired angle. By the above means, not only the operations are simple which enhances the user experience, operating resources of the smart terminal may also be saved.

Distinguished from the previous embodiment, in the current embodiment the determination module may further determine whether the rotation angle exceeds the threshold angle value when the rotation angle is determined by the determination module, thereby effectively reducing the occurrence of the memory resources of the smart terminal being wasted caused by inadvertent touch. In addition, the smart terminal of the current embodiment may set multiple preset angles, which thus further enhances the user experience.

What is described above is merely the embodiments of the present disclosure, thus shouldn't be construed to be limiting the patentable scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

**Claims**

1. A method of rotating a picture with a smart terminal, comprising:

   detecting, by the smart terminal, that a touch operation applied on the picture displayed on a screen of the smart terminal comprises at least two touch points, and, when a trajectory of each of the at least two touch points is an arc, determining the touch operation to be an operation of rotating the picture;
   determining, by the law of cosines, a rotation angle of the touch operation in accordance with the trajectory of each of the at least two touch points;

determining whether the rotation angle exceeds a threshold angle value; and

when the rotation angle exceeds the threshold angle value, synchronously rotating the picture in accordance with a rotation direction of the trajectories and the rotation angle.

2. The method according to claim 1, further comprising, after the step of when the rotation angle exceeds the threshold angle value, synchronously rotating the picture in accordance with the rotation direction of the rotation action and the rotation angle:

determining, from a plurality of preset angles, a first preset angle which has a minimum absolute value of difference with the rotation angle after the synchronous rotation, and rotating the picture to a position of the first preset angle.

3. The method according to claim 2, wherein the plurality of preset angles comprises angles of 0 degrees, 90 degrees, 180 degrees and 270 degrees, under a standard coordinate system.

4. The method according to claim 2, wherein the step of determining, from the plurality of preset angles, the first preset angle which has the minimum absolute value of difference with the rotation angle after the synchronous rotation and rotating the picture to the position of the first preset angle, comprising:

when an absolute value of the rotation angle is smaller than 45 degrees or greater than 325 degrees, bouncing the picture back to its initial position;

when the absolute value of the rotation angle is greater than 45 degrees and smaller than 135 degrees, holding the picture at a position of 90 degrees;

when the absolute value of the rotation angle is greater than 135 degrees and smaller than 225 degrees, holding the picture at a position of 180 degrees; and

when the absolute value of the rotation angle is greater than 225 degrees and smaller than 325 degrees, holding the picture at a position of 270 degrees.

5. A method of rotating a picture with a smart terminal, comprising:

detecting, by the smart terminal, that a touch operation applied on the picture displayed on a screen of the smart terminal comprises at least two touch points, and, when a trajectory of each of the at least two touch points is an arc, determining the touch operation to be an operation of rotating the picture;

determining a rotation angle of the touch operation, based on the trajectories of the at least two touch points; and

rotating, synchronously, the picture in accordance with a rotation direction of the trajectories and the rotation angle.

6. The method according to claim 5, further comprising, before the step of rotating synchronously the picture in accordance with the rotation direction of the trajectories and the rotation angle:

determining whether the rotation angle exceeds a threshold angle value;

when the rotation angle exceeds the threshold angle value, synchronously rotating the picture in accordance with the rotation direction of the trajectories and the rotation angle.

7. The method according to claim 6, further comprising, after the step of when the rotation angle exceeds the threshold angle value, synchronously rotating the picture in accordance with the rotation direction of the rotation action and the rotation angle:

determining, from a plurality of preset angles, a first preset angle which has a minimum absolute value of difference with the rotation angle after the synchronous rotation, and rotating the picture to a position of the first preset angle.

8. The method according to claim 7, wherein the plurality of preset angles comprises angles of 0 degrees, 90 degrees, 180 degrees and 270 degrees, under a standard coordinate system.

9. The method according to claim 7, wherein the step of determining, from the plurality of preset angles, the first preset angle which has the minimum absolute value of difference with the rotation angle after the synchronous rotation, and rotating the picture to the position of the first preset angle, comprising:

when an absolute value of the rotation angle is smaller than 45 degrees or greater than 325 degrees, bouncing the picture back to its initial position;

when the absolute value of the rotation angle is greater than 45 degrees and smaller than 135 degrees, holding the picture at a position of 90 degrees;

when the absolute value of the rotation angle is greater than 135 degrees and smaller than 225 degrees, holding the picture at a position of 180 degrees; and

when the absolute value of the rotation angle is greater than 225 degrees and smaller than 325 degrees, holding the picture at a position of 270 degrees.

10. The method according to claim 6, wherein the threshold angle value is 5 degrees.

11. The method according to claim 5, wherein the step of determining the rotation angle of the touch operation based on the trajectories of the at least two touch points comprises:

determining, by the smart terminal, by the law of cosines, the rotation angle of the touch operation in accordance with the trajectories of the at least two touch points.

12. A smart terminal, comprising a detection module, a determination module and an execution module, wherein

the detection module is configured to detect that a touch operation applied on a picture displayed on a screen of the smart terminal comprises at least two touch points, and to, when a trajectory of each of the at least two touch points is an arc, determine the touch operation to be an operation of rotating the picture;
the determination module is configured to determine a rotation angle of the touch operation, based on the trajectories of the at least two touch points; and
the execution module is configured to rotate, synchronously, the picture in accordance with a rotation direction of the trajectories and the rotation angle.

13. The smart terminal according to claim 12, wherein

the determination module is further configured to, before the picture is rotated synchronously in accordance with the rotation direction of the trajectories and the rotation angle, determine whether the rotation angle exceeds a threshold angle value;
the execution module is further configured to, when the rotation angle exceeds the threshold angle value, rotate synchronously the picture in accordance with the rotation direction of the trajectories and the rotation angle.

14. The smart terminal according to claim 13, wherein the execution module is specifically configured to determine, from a plurality of preset angles, a first preset angle having a minimum absolute value of difference with the rotation angle after the synchronous rotation, and to rotate the picture to a position of the first preset angle in accordance with the rotation direction of the trajectories.

15. The smart terminal according to claim 14, wherein the plurality of preset angles comprises angles of 0 degrees, 90 degrees, 180 degrees and 270 degrees, under a standard coordinate system.

16. The smart terminal according to claim 14, wherein the execution module is specifically configured to:

when an absolute value of the rotation angle is smaller than 45 degrees or greater than 325 degrees, bounce the picture back to its initial position;
when the absolute value of the rotation angle is greater than 45 degrees and smaller than 135 degrees, hold the picture at a position of 90 degrees;
when the absolute value of the rotation angle is greater than 135 degrees and smaller than 225 degrees, hold the picture at a position of 180 degrees; and
when the absolute value of the rotation angle is greater than 225 degrees and smaller than 325 degrees, hold the picture at a position of 270 degrees.

17. The smart terminal according to claim 13, wherein the threshold angle value is 5 degrees.

| | |
|---|---|
| Detect, by a smart terminal, that a touch operation applied on a picture displayed on a screen of the smart terminal comprises at least two touch points, and, when a trajectory of each of the at least two touch points is an arc, determine the touch operation to be an operation of rotating the picture | 101 |

| | |
|---|---|
| Determine a rotation angle of the touch operation, based on the trajectories of the at least two touch points | 102 |

| | |
|---|---|
| Rotate, synchronously, the picture in accordance with a rotation direction of the trajectories and the rotation angle | 103 |

FIG. 1

FIG. 2

FIG. 3

| | |
|---|---|
| Detect, by a smart terminal, that a touch operation applied on a picture displayed on a screen of the smart terminal comprises at least two touch points, and, when a trajectory of each of the at least two touch points is an arc, determine the touch operation to be an operation of rotating the picture | 401 |
| Determine a rotation angle of the touch operation, based on the trajectories of the at least two touch points | 402 |
| Determine whether the rotation angle exceeds a threshold angle value | 403 |
| When the rotation angle exceeds the threshold angle value, rotate, synchronously the picture in accordance with a rotation direction of the trajectories and the rotation angle | 404 |

FIG. 4

FIG. 5

FIG. 6A

FIG. 6B

FIG. 7A

FIG. 7B

FIG. 8A

FIG. 8B

FIG. 9A

FIG. 9B

FIG. 10A

FIG. 10B

FIG. 11A

FIG. 11B

FIG. 12A

FIG. 12B

FIG. 12C

| Detection module | Determination module | Execution module |
|---|---|---|
| 1301 | 1302 | 1303 |

FIG. 13

# INTERNATIONAL SEARCH REPORT

| | International application No. |
|---|---|
| | **PCT/CN2015/083368** |

## A. CLASSIFICATION OF SUBJECT MATTER

G06F 3/0488 (2013.01) i; G06T 3/60 (2006.01) i

According to International Patent Classification (IPC) or to both national classification and IPC

## B. FIELDS SEARCHED

Minimum documentation searched (classification system followed by classification symbols)

G06F; G06T

Documentation searched other than minimum documentation to the extent that such documents are included in the fields searched

Electronic data base consulted during the international search (name of data base and, where practicable, search terms used)

CNKI, CNPAT, WPI, EPODOC: image, object, rotat+, contact, tap, point, threshold

## C. DOCUMENTS CONSIDERED TO BE RELEVANT

| Category* | Citation of document, with indication, where appropriate, of the relevant passages | Relevant to claim No. |
|---|---|---|
| X | CN 103970408 A (MORPHO, INC.), 06 August 2014 (06.08.2014), description, paragraphs [0082]-[0085] and [0153]-[0187], and figures 1 and 3-6 | 1-17 |
| X | CN 103809868 A (OMRON CORPORATION), 21 May 2014 (21.05.2014), description, paragraphs [0069] and [0086]-[0092], and figures 7A and 10A-10C | 1, 5-6, 10-13, 17 |
| A | CN 101630403 A (ASPIRE DIGITAL TECHNOLOGIES (SHENZHEN) CO., LTD.), 20 January 2010 (20.01.2010), the whole document | 1-17 |

☐ Further documents are listed in the continuation of Box C.   ☒ See patent family annex.

| | |
|---|---|
| \*  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 16 October 2015 (16.10.2015) | **03 November 2015 (03.11.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LIU, Zhongtao** Telephone No.: (86-10) **62413808** |

Form PCT/ISA/210 (second sheet) (July 2009)

## INTERNATIONAL SEARCH REPORT
### Information on patent family members

| International application No. |
| --- |
| **PCT/CN2015/083368** |

| Patent Documents referred in the Report | Publication Date | Patent Family | Publication Date |
| --- | --- | --- | --- |
| CN 103970408 A | 06 August 2014 | JP 2014160461 A | 04 September 2014 |
| | | EP 2759921 A2 | 30 July 2014 |
| | | JP 2015122120 A | 02 July 2015 |
| | | US 2014215365 A1 | 31 July 2014 |
| CN 103809868 A | 21 May 2014 | EP 2731004 A3 | 24 June 2015 |
| | | JP 2014096035 A | 22 May 2014 |
| | | EP 2731004 A2 | 14 May 2014 |
| | | US 2014132537 A1 | 15 May 2014 |
| CN 101630403 A | 20 January 2010 | None | |

Form PCT/ISA/210 (patent family annex) (July 2009)